# EUROPEAN PATENT SPECIFICATION

(11) **EP 1 796 358 B1**
(45) Date of publication and mention of the grant of the patent: **27.07.2011**
(21) Application number: 06256077.6
(22) Date of filing: 28.11.2006
(51) Int. Cl.: H04M 1/725, H04W 84/16

(54) **Cordless communication apparatus**
Schnurloses Kommunikationsgerät
Dispositif de communication sans fil

(30) Priority: 09.12.2005 JP 2005355914
(43) Date of publication of application: 13.06.2007
(73) Proprietor: Brother Kogyo Kabushiki Kaisha, Nagoya, Aichi 467-8561 (JP)
(72) Inventor: Sakakibara, Shinichi, c/o Brother Kogyo K.K., Nagoya, Aichi 467-8562 (JP)
(74) Representative: Smith, Samuel Leonard

(56) References cited:
- EP-A- 1 498 981
- WO-A-01/52429
- WO-A-96/02984
- GB-A- 2 246 686
- US-A- 5 648 992
- IRVINE J ET AL: "Link adaptation to improve coverage in the TETRA private mobile radio system" VEHICULAR TECHNOLOGY CONFERENCE, 1999. VTC 1999 - FALL. IEEE VTS 50TH AMSTERDAM, NETHERLANDS 19-22 SEPT. 1999, PISCATAWAY, NJ, USA,IEEE, US, vol. 2, 19 September 1999 (1999-09-19), pages 1091-1095, XP010353123 ISBN: 0-7803-5435-4

## Description

### Background

### Technical Field

The present invention relates to a cordless communication apparatus configured to communicate by switching a communication mode between a single-slot mode and a multi-slot mode.

### Related Art

There is known a cordless communication apparatus such as telephone equipment for executing wireless communication between a main telephone and a cordless handset. Typically, a communication between the main telephone and the cordless handset is executed such that the communication mode is switched between a single-slot mode which is for communicating by using one time slot in one frame which is divided into a plurality of time slots (i.e., a single-slot mode), and a multi-slot mode which is for transmitting identical information by using a plurality of time slots in the case of poor communication conditions. An example of such a cordless communication apparatus is disclosed in Japanese Patent Provisional Publication No. HEI 11-308123.

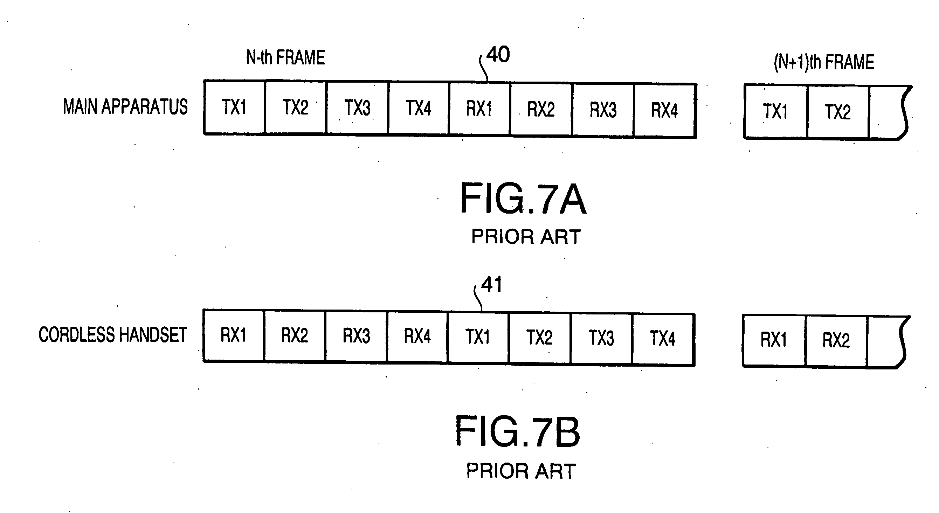

Figs. 7A and 7B show an exemplary frame format showing a configuration of frames used for executing transmission and reception of data between the main telephone and the cordless handset. According to Figs.7A and 7B, 40 denotes a frame format of the main telephone and 41 denotes a frame format of the cordless handset. Each frame has four slots (TX1-TX4) in the transmission side, and four slots (RX1-RX4) in the reception side. One of the four slots for transmission is used for making a telephone call and one of the four slots for reception is used for receiving a call. When a slot *1 is used as a call slot, slots *2-*4 become open slots which are to be used for communication including communication of control data. A communication according to a frequency-hopping spread spectrum technology is executed by changing the channel (frequency) to be used with respect to each frame. Therefore, a channel (frequency) used in an N-th frame (frame N) is different from a channel (frequency) used in an (N+1)-th frame (frame N+1).

In the case of a single-slot mode, transmission is executed using one of the transmission slots (e.g., TX1) in the N-th frame, and reception is executed using one of the reception slots (e.g., RX1). In the case of a multi-slot mode, transmission is executed using one of the transmission slots (e.g., TX1) in the N-th frame and also using the transmission slots (e.g., TX2) in the (N+1)-th frame for transmitting the same information, and reception is executed using one of the reception slots (e.g., RX1) and also using another one of the reception slots (e.g., RX2) which is in the (N+1)-th frame for receiving the same information.

After received the two slots, one of the data which is lower in the error rate, which is judged by comparison of each bit error rate of the slots, is to be converted into audio data to output. Therefore, the multi-slot mode enables precise communication even in poor communication conditions such as in a weak electric field. It should be noted, however, the multi-slot mode has a drawback in that power consumption in the multi-slot mode is larger than that of the single-slot mode, that may shorten available time of the cordless handset which uses batteries.

IRVINE J ET AL: "Link adaptation to improve coverage in the TETRA private mobile radio system" VEHICULAR TECHNOLOGY CONFERENCE, 1999. VTC 1999-FALL. IEEE VTS 50TH AMSTERDAM, NETHERLANDS 19-22 SEPT. 1999, PISCATAWAY, NJ, USA, IEEE, US, vol. 2, 19 September 1999 (1999-09-19), pages 1091-1095 discloses a cordless communication apparatus and method according to the pre-characterizing sections of claims 1 and 5.

### Summary of the Invention

Aspects of the invention provide a cordless communication apparatus capable of maintaining communication quality even in a weak electric field, is provided.

It is noted that various connections are set forth between elements in the following description. It is noted that these connections in general and unless specified otherwise, may be direct or indirect and that this specification is not intended to be limiting in this respect. Aspects of the invention may be implemented in computer software as programs storable on computer-readable media including but not limited to RAMs, ROMs, flash memory, EEPROMs, CD-media, DVD-media, temporary storage, hard disk drives, floppy drives, permanent storage, and the like.

According to embodiments of the invention, there is provided a cordless communication apparatus, comprising:
a communication mode setting unit configured to switch between a single-slot mode for executing communication using one of a plurality of slots included in one frame, and a multi-slot mode for executing communication using more than one slots of the plurality of slots included in one frame, a wireless communication being executed in a communication mode selected by the communication mode setting unit;
characterized in that the apparatus further comprises:
   an antenna setting unit configured to switch between a first antenna and a second antenna having different receiving characteristics;
   a communication condition detecting unit configured to detect a communication condition of each of the first antenna and the second antenna; and
   in that the communication mode setting unit is provided with an operating member configured to select the communication mode to be an automatic mode, in which switching between the single-slot mode and multi-slot mode is controlled by a controlling unit, or an arbitrary one of the single-slot mode and the multi-slot mode;
   the controlling unit being configured to, when the communication mode in set to be the automatic mode, to :
      when the communication condition of the first antenna detected by the communication condition detecting unit is better than a predetermined communication condition, the controlling unit controls the antenna setting unit to select the first antenna for reception and control the communication mode setting unit to set the communication mode to the single slot mode, and
      when the communication condition of the first antenna detected by the communication condition detecting unit is not better than a predetermined communication condition, the controlling unit controls the communication mode setting unit (11) to set the communication mode to the multi-slot mode, and compares the condition of the first antenna with the condition of the second antenna, and when communication condition of the second antenna detected by the communication condition detecting unit is better than the communication condition of the first antenna detected by the communication condition detecting unit, the controlling unit controls the antenna setting unit to select the second antenna for reception.

The cordless communication apparatus according to the above configuration, good communication conditions can be maintained without degrading call quality even in poor communication conditions. Further, when the multi-slot mode is selected, the communication mode here is set to the single-slot mode when communication condition is well, thus power consumption comes to be small.

The communication condition detecting unit may be provided with a reception electric field level detecting unit to detect reception electric field levels of the first antenna and the second antenna, the predetermined condition including a condition where the reception electric field level is greater than a predetermined value.

The cordless communication apparatus may be provided with an amplifier configured to amplify electric field signal received by either of the first antenna and the second antenna. The controlling unit may set a gain of the amplifier to a first value when the reception electric field level detected by the reception electric field level detecting unit is higher than the predetermined level, while the controlling unit may set the gain of the amplifier to a second value which is larger than the first value when the reception electric field level detected by the reception electric field level detecting unit is not higher than the predetermined level.

The communication condition detecting unit may be provided with a bit error rate detecting unit configured to detect a bit error rate of a digital signal received by each of the first antenna and the second antenna, the predetermined condition including a condition where the bit error rate is less than a predetermined value.

By detecting and comparing the bit error rates, accurate judgment can be made in a state with obstructive reception factors such as noises or jamming exist.

According to embodiments of the invention, there is provided a method of receiving communication frames with a cordless communication apparatus which is configured such that a single-slot mode for executing communication using one of a plurality of slots included in one frame, and a multi-slot mode for executing communication using more than one slots of the plurality of slots included in one frame can be switched, a wireless communication being executed in a communication mode selected by a communication mode setting unit,
characterised in that:
the cordless communication apparatus is provided with first antenna and a second antenna having different receiving characteristics, and the method further comprises the steps of:
   selecting the communication mode to be an arbitrary one of the single-slot mode and multi-slot mode, or an automatic mode;
   detecting a communication condition of each of the first antenna (1) and the second antenna; and
   if the communication mode is selected to be the single-slot or multi-slot mode:
      comparing the condition of the first antenna with the condition of the second antenna, and when the communication condition of the second antenna is better than the communication condition of the first antenna, selecting the second antenna for reception;
      or, if the communication mode is selected to be the automatic mode:
         selecting the first antenna for reception and setting the communication mode to the single-slot mode when the communication condition of the first antenna detected by the communication condition detecting step is better than a predetermined communication condition; and
         when the communication condition of the first antenna detected by the communication condition detecting step is not better than a predetermined communication condition, setting the communication mode to the multi-slot mode, and comparing the condition of the first antenna with the condition of the second antenna, and when the communication condition of the second antenna is better than the communication condition of the first antenna, selecting the second antenna for reception.

### Brief Description of the Accompanying Drawings

Fig. 1 is a block diagram showing a configuration of a cordless communication apparatus according to a first embodiment of the present invention.
Fig. 2 illustrates an operation panel showing the details of an operating unit according to an embodiment of the present invention.
Figs. 3A-3D illustrate display screens for setting a call mode according to an embodiment of the present invention, wherein Fig. 3A shows a screen in a standby mode,
Fig. 3B shows a function selection screen, Fig. 3C shows a primary call mode selection screen, and Fig. 4D shows a secondary call mode selection screen.
Fig. 4 is a flow chart showing a communication process according to an embodiment of the present invention.
Fig. 5 is a block diagram showing a configuration of a cordless communication apparatus according to a second embodiment of the present invention.
Fig. 6 is a graph showing the relationship between input reception electric field levels and outputs according to a second embodiment of the present invention.
Figs. 7A and 7B show a frame format showing a configuration of communication frames under the conventional technology.

### Description of the Embodiments

Hereinafter, referring to accompanying drawings, embodiments of the present invention will be described.

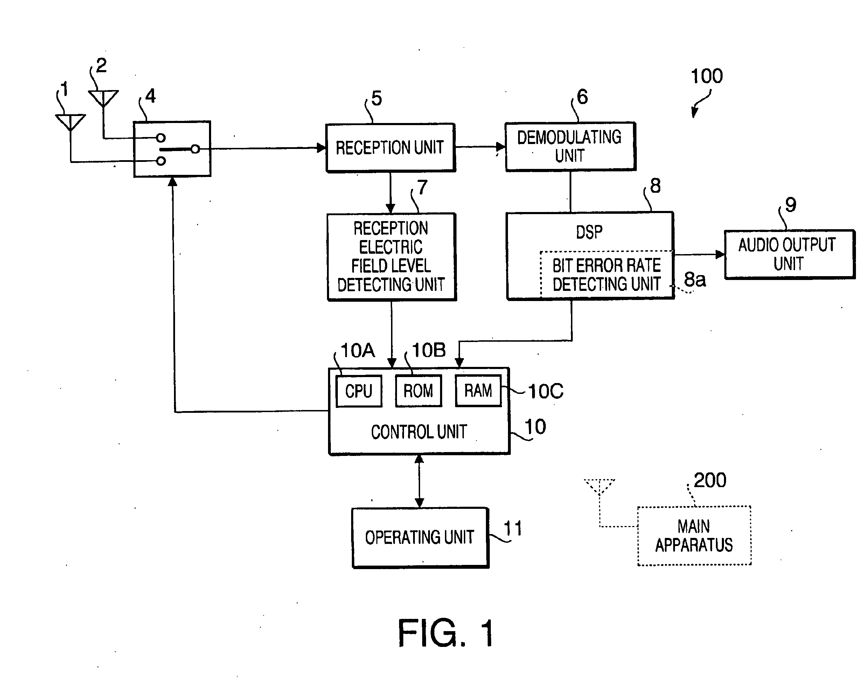

Fig. 1 is a block diagram showing an electrical configuration of a cordless communication apparatus 100 according to embodiments of the present invention. The cordless communication apparatus 100 according to the embodiment is a cordless handset of digital cordless telephone equipment which communicates with a main apparatus 200 using a frequency-hopping spread spectrum technology while changing the channel (frequency) to be used with respect to each frame, which is configured with four transmission slots and four reception slots as in the conventional system shown in Fig. 7.

Fig. 1 is a block diagram showing a configuration of a reception part of the cordless communication apparatus 100 according to a first embodiment of the present invention, and the other a transmission part is omitted. As shown in Fig. 1, the cordless communication apparatus 100 is provided chiefly with a main antenna 1, a sub-antenna 2, an antenna selector switch 4, a receiving unit 5, a demodulating unit 6, a reception electric field level detecting unit 7, a DSP 8 (digital signal processor), an audio output unit 9, a control unit 10, and an operating unit 11.

The main antenna 1 is an antenna with high receiving sensitivity which projects outwardly from the body of the cordless communication apparatus 100. The sub-antenna 2 is lower in sensitivity than the main antenna 1, and is formed inside the body of the cordless communication apparatus 100, having different directional characteristics from the main antenna 1, however, sometimes the sub-antenna 2 is higher in the reception electric field level than the main antenna 1 depending on electrical wave conditions.

The antenna selector switch 4 is a switch to select between the main antenna 1 and the sub-antenna 2 to receive a transmission depending on communication conditions. The main antenna 1 and the sub-antenna 2 are switched by the antenna selector switch 4 as necessary, so that the reception electric field level and bit error rate are detected and the communication conditions are to be judged.

The receiving unit 5 converts the electric wave signals received by the antennas 1 and 2 into level signals for detecting the reception electric field level, and outputs them to the reception electric field level detecting unit 7 while outputs the received data, from which the carrier is removed, to the demodulating unit 6.

The demodulating unit 6 demodulates inputted reception data into a digital value, and outputs it to the DSP 8. The DSP 8 is provided with a bit error rate detecting unit 8a which detects a bit error rate based on the digital value inputted from the demodulating unit 6. The bit error rate is detected by computing the rate of the bits which have not been received correctly to a known digital value contained in the reception data. The DSP 8 detects audio data contained in the reception data and outputs it to the audio output unit 9. The audio output unit 9 executes a D/A conversion from the audio data inputted from DSP 8, and drives a speaker.

The control unit 10 is provided with a microcomputer which includes a CPU (Central Processing Unit) 10A, a ROM (Read Only Memory) 10B, and a RAM (Random Access Memory) 10C, and the CPU 10A controls the cordless communication apparatus 100 by executing the control program stored in the ROM 10B.

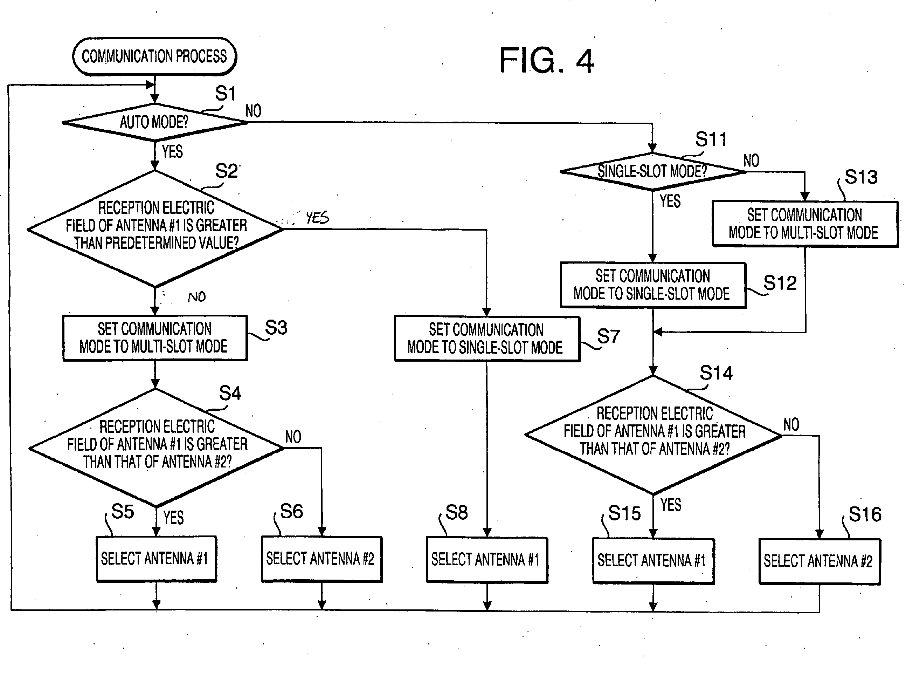

A reception process which executes a process of a flow chart shown in Fig. 4 is stored as one of the control programs. In the reception process, one of the main antenna 1 and the sub-antenna 2 to be used, and switching control between a single-slot mode and a multi-slot mode, are executed depending on the received electric field level and the bit error rate.

When switching between the single-slot mode and the multi-slot mode is executed, the control unit 10 informs the main apparatus 200 of the execution of the switching through an open slot. Thus, the main apparatus 200 executes the switching control in response to the switching control at the cordless handset.

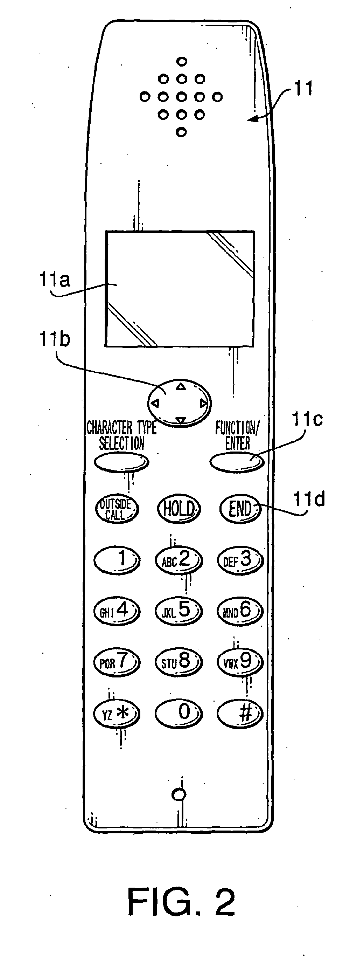

The operating unit 11 is provided with a display screen and a plurality of switches, which will be described in detail later with reference to Fig. 2. It is noted here that the communication mode (hereinafter, referred to as "call mode") can be set by operating these switches provided to the operating unit 11. A call mode includes an automatic mode in which switching between the single-slot mode and the multi-slot mode is operated automatically, the single-slot mode, and the multi-slot mode, so that the call mode can be set to one of these three modes with the switches provided to the operating unit. When the automatic mode is selected, setting of which antenna to be used depending on the reception electric field levels of the main antenna 1 and the sub-antenna 2, and switching control between the single-slot mode and multi-slot mode are to be executed under control of the control unit 10.

When the single-slot mode is selected, the control unit 10 determines which one of the main antenna 1 and the sub-antenna 2 is to be used depending on the reception electric field levels, and communication in the single-slot mode is executed using the selected antenna. When the multi-slot mode is selected, the control unit 10 determines which one of the main antenna 1 and the sub-antenna 2 is to be used depending on the reception electric field levels, and communication in the multi-slot mode is executed using the selected antenna.

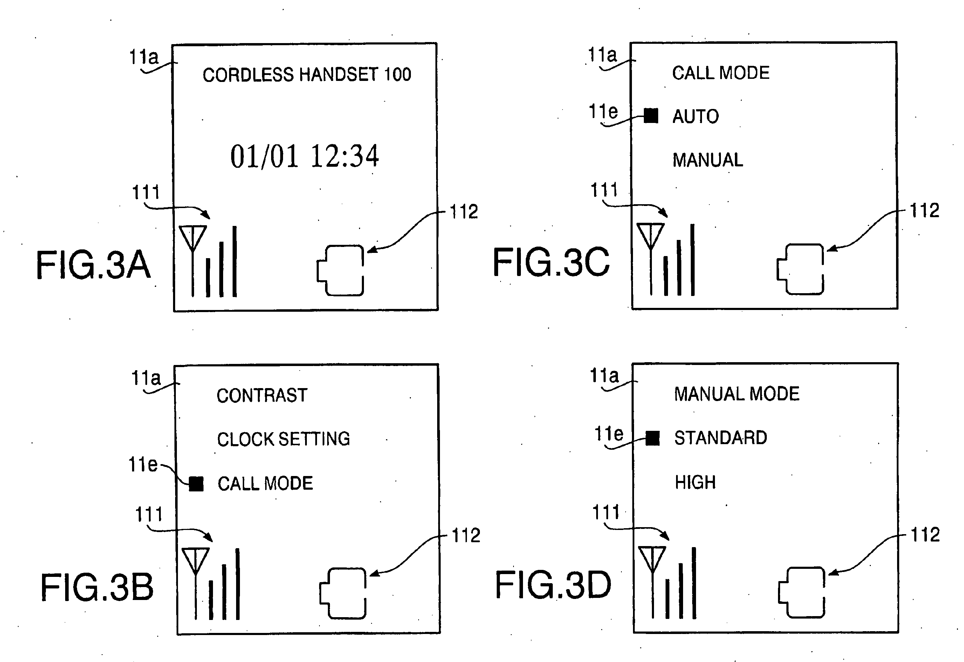

Next, referring to Fig. 2, about the operating unit 11 will be described. Fig. 2 illustrates an operation panel showing the details of an operating unit 11 according to an embodiment of the present invention. As shown in Fig. 2, the operation panel 11 of the cordless communication apparatus 100 is provided an LCD screen 11a for displaying telephone numbers and menus, and various buttons such as a cursor button 11b for directing motion of a cursor 11e (ref. Fig. 3), a FUNCTION/ENTER button 11c which is used for selecting functions and determining the selected function, a END button 11d for instructing termination of calling and setting of functions, and other buttons including a numeric keypad to input telephone numbers and characters, a CHARACTER TYPE SELECTION button to switch among characters to be inputted by the numeric keypad such as number symbols and Katakana, an outside call button to be used for making an outside call, and a HOLD button for putting the call on hold.

The cursor button 11b allows a user to move the cursor 11e displayed in the LCD screen 11a in one of the four directions by pushing one of the positions which are indicated on the upper surface of the button as four triangles pointing four directions respectively right and left, and up and down.

Next, referring to Figs. 3A-3D, operating steps to set the call mode, and screens displayed on the LCD screen 11a during the steps will be described will be described. Figs. 3A-3D illustrate display screens for setting a call mode. Specifically, Fig. 3A shows a screen in a standby mode, Fig. 3B shows a function selection screen, Fig. 3C shows a screen for selecting a primary call mode, and Fig. 3D shows a screen for selecting a secondary call mode.

When the cordless communication apparatus 100 is in the standby mode, as shown in Fig. 3A, "CORDLESS HANDSET 100" indicating, for example, the 1st cordless handset among a plurality of cordless handsets, date and time (e.g., "01/01 12:30"), a graphic indicating an electric wave receiving condition, and another graphic indicating a battery consumption condition are to be displayed.

In this standby mode, a selectable function is displayed each time of pushing the FUNCTION/ENTER button 11c. Fig. 3B is the function selection screen displayed by such operation. In this display, "CONTRAST OF THE SCREEN" to set contrast of the display screen, "TIME SETTING" to set the clock, and "CALL MODE" to set the call mode are selectively indicated.

In the screen shown in Fig. 3B, when the cursor 11e is positioned to the "CALL MODE" by manipulating the cursor button 11b, and the FUNCTION/ENTER button 11c is pushed, the screen for selecting the primary call mode shown in Fig. 3C is displayed. Specifically, "AUTOMATIC" indicating an automatic mode to switch between the single-slot mode and the multi-slot mode automatically depending on the electric wave conditions, and "MANUAL" indicating a manual mode which is selected by a user are indicated.

In this screen, by positioning the cursor 11e to "AUTOMATIC", the automatic mode, and pushing the FLTNCTION/BNTER button 11c, the call mode is set to the automatic mode, and by positioning the cursor 11e to "MANUAL" , the manual mode, and pushing the FUNCTION/ENTER button 11c, "MANUAL MODE" for selecting the secondary call mode shown in Fig. 3D is indicated. In this secondary call mode selection screen, "STANDARD" which is corresponding to the single-slot mode, and "STRONG" which is corresponding to the multi-slot mode are indicated, and by positioning the cursor 11e to either of them and pushing the FUNCTION/ENTER button 11c, the corresponding mode is selected. Herewith, by pushing the CLOSE (hang-up) button 11d after setting the call mode, the screen returns to the standby mode shown in Fig. 3A.

Next, a reception control process to executed by the CPU 10A will be described with reference to Fig. 4, which shows a flow chart illustrating the reception control process according to an embodiment of the present invention. The reception control process is activated when the cordless communication apparatus 100 is powered on. In the explanation of the reception control process, the main antenna 1 will occasionally be referred to as "antenna #1", and the sub-antenna 2 will occasionally be referred to as an "antenna #2".

First, it is judged whether the call mode is already set to the automatic mode on the operating unit 11 by a user (S 1). If the call mode is already set to the automatic mode (S 1: YES), whether the reception electric field level of the antenna #1 is higher than the predetermined level is judged (S2).

If the reception electric field level of the antenna #1 is not higher than the predetermined level (S2: NO), the call mode is set to the multi-slot mode (S3), and then it is judged whether the reception electric field level of the antenna #1 is higher by comparison of the reception electric field level of the antenna #1 with the reception electric field level of the antenna #2 (S4). If the reception electric field level of the antenna #1 is higher (S4: YES), the call mode is set to the antenna #1 for executing transmission and reception (S5). If the reception electric field level of the antenna #1 is not higher (S4: NO), the call mode is set to the antenna #2 for executing transmission and reception (S6).

If the reception electric field level of the antenna #1 is higher than the predetermined level (S2: YES), the call mode is set to the single-slot mode (S7), and the antenna #1 is selected for executing transmission and reception (S8). When the process of S5, S6 or S8 is terminated, the control returns to the process of S1.

If the call mode is not set to the automatic mode in the judgment process of S 1 (S1: NO), it is judged whether the single-slot mode is already selected in the call mode on the operating unit 11 by the user (S 11). If the single-slot mode is already selected (S11: YES), the call mode is set to the single-slot mode for executing transmission and reception (S12). If the single-slot mode is not selected (S 11: NO), the call mode is set to the multi-slot mode for executing transmission and reception (S 13).

When setting of call mode is terminated in S12 or S13, it is judged whether the reception electric field level of the antenna #1 is higher by comparison of the reception electric field level of the antenna #1 and the reception electric field level of the antenna #2 (S 14). If the reception electric field level of the antenna #1 is higher (S 14: YES), the call mode is set to the antenna #1 for executing transmission and reception (S15). If the reception electric field level of the antenna #1 is not higher (S14: NO), the call mode is set to the antenna #2 for executing transmission and reception (S16). When a process of S 15 or S 16 is terminated, the control returns to the process of S 1. In addition to the process above, for executing the process of S2, instead of judgment by detecting the reception electric field level of the antenna #1, it may be judged by the bit error rate which is detected by the bit error rate detecting unit 8a of the DSP 8. Also, for selecting an antenna between the antenna #1 and the antenna #2, it may be judged by comparison of each bit error rate of the antennas detected by a bit error rate detecting system and the antenna which is lower in the bit error rate is to be selected.

As explained above, according to a first embodiment of the present invention, if the reception electric field level of the main antenna 1 is higher than the predetermined level, transmission and reception is executed by the main antenna 1 while the call mode is set to the single-slot mode for executing communication. If the reception electric field level of the main antenna 1 is not higher than the predetermined level, the call mode is set to the multi-slot mode, and transmission and reception is to be executed by the antenna which is higher in the reception electric field level by comparison of the reception electric field levels between the main antenna 1 and the sub-antenna 2. Therefore, even if the cordless handset is moved to a position in a weak electric field, it is capable of communication without degrading communication quality.

Further, switching between the single-slot mode and the multi-slot mode can be operated by a user without depending on the reception electric field levels of antennas, thus the optimal call mode, free from communication quality degradation, by judgment of the user, is available.

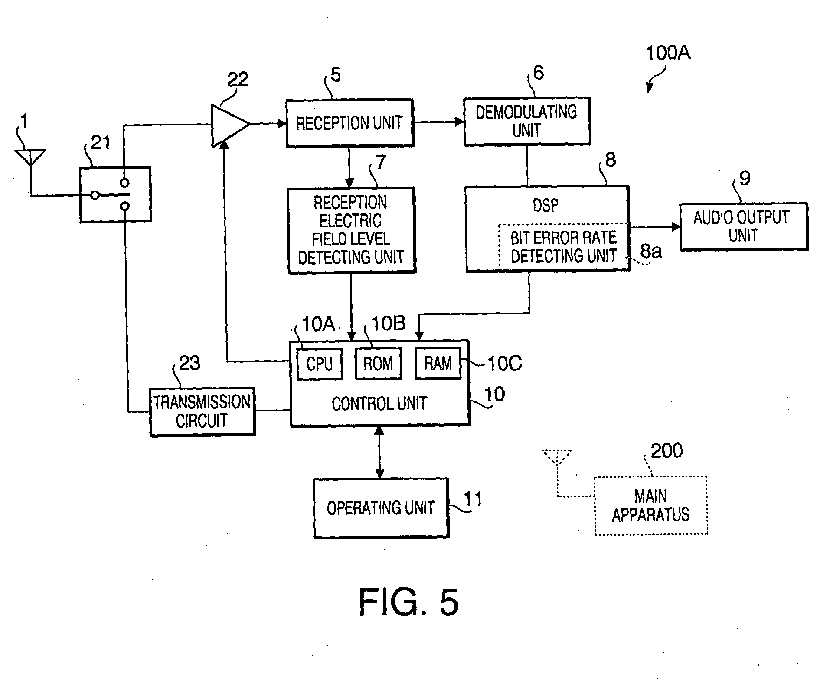

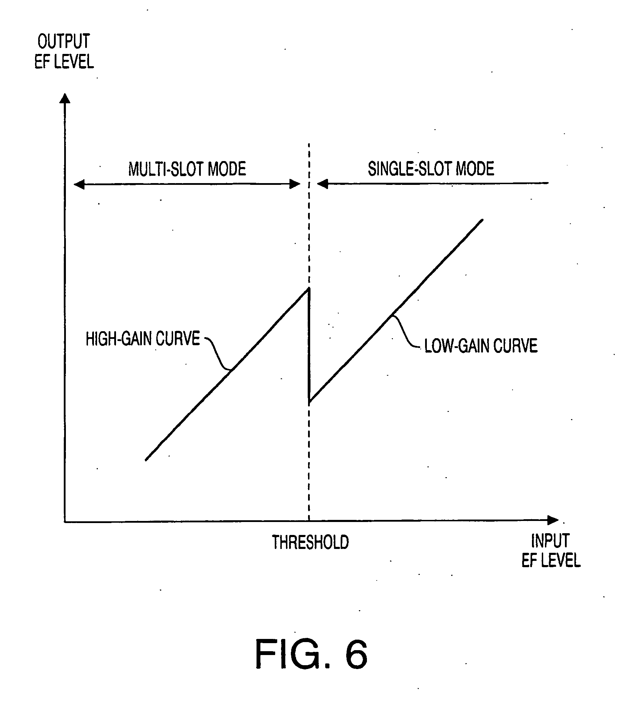

Next, referring to Fig. 5 and Fig. 6, an example of the present invention will be described. Fig. 5 is a block diagram showing a configuration of a cordless communication apparatus 100A according to a second embodiment. Meanwhile, the same reference numerals/symbols are put respectively for the units identical to the first embodiment, and the explanations will be omitted/simplified for brevity. As shown in Fig. 5, the cordless communication apparatus 100A is different from the first embodiment in that the main antenna 1, a switch 21 for switching between transmission and reception, an amplifier 22 for amplifying received electric field, and a transmission circuit 23 are provided, while the sub-antenna 2, and the antenna selector switch 4 for switching between the main antenna 1 and the sub-antenna 2, they are provided in the first embodiment, are not provided herewith.

In this cordless communication apparatus 100A, the switch 21 is shifted to and from at the time of transmission and at the time of reception. The anterior half of each frame is for the time of transmission and the posterior half is for the time of reception. During reception time, the reception electric field received by the main antenna 1 is to be inputted to the amplifier 22. In the amplifier 22, a gain (amplification factor) is divided into two phases by the control unit 10. To put it plainly, if the reception electric field level detected by the detecting unit 7 is higher than a predetermined threshold, the gain is to be set to small, or if the reception electric field level is lower than the predetermined threshold, the gain is to be set to large. Also, when the call mode is already set to the automatic mode on the operating unit 11 by a user, if the gain is set to large, the call mode is to be set to the multi-slot mode, or if the gain is set to small, the call mode is to be set to the single-slot mode.

If the call mode is already set to the single-slot mode on the operating unit 11 by a user, the call mode is to be set to the single-slot mode regardless of gain, or if the call mode is already set to the multi-slot mode, the call mode is to be set to the multi-slot mode.

Fig. 6 is a graph showing the switching of the reception electric field levels and modes when the call mode is set to the automatic mode. On this graph, the horizontal axis is a reception electric field level to be inputted into the amplifier 22, and the vertical axis is a reception electric field level amplified by the amplifier 22.

As shown in Fig. 6, if the input reception electric field level is higher than the threshold, gain is to be set to small (low gain curve) while the call mode is to be set to the single-slot mode, or if the input reception electric field level is lower than the threshold, gain is to be set to large (high gain curve) while the call mode is to be set to the multi-slot mode.

As explained above, according to an example, if the input reception electric field level is high, gain of the amplifier 22 is to be set to small while the call mode is to be set to the single-slot mode, or if the input reception electric field level is low, gain of the amplifier 22 is to be set to large while the call mode is to be set to the multi-slot mode, therefore, even if the electric field is weak, it is capable of communication without degrading communication quality.

As thus far described, the present invention has been explained based on the embodiments above, however, the present invention is not to be limited to the what is shown in the drawings and described in the specification including embodiments and claims. It will be obvious that various changes and improvements may be made without departing from the scope of the present invention.

For example, although the cordless communication apparatus 100 is described as a cordless handset of telephone equipment according to the embodiments above, it may be a cordless handset of an MFP (multiple function peripheral) having multiple functions, such as a facsimile function and a copying function, instead.

Although the main antenna and sub-antenna are switched depending on the detected reception electric field levels of the main antenna and the sub-antenna and also the single-slot mode and the multi-slot mode are switched according to the first embodiment above, however instead of above, it is possible that an amplifier for amplifying the reception electric field level received by an antenna is to be provided in the first embodiment, as described in the example, and if the reception electric field level is low, the gain of the amplifier is to be large while the call mode is to be set to the multi-slot mode, or if the reception electric field level is high, the call mode is to be set to the single-slot mode.

Further, according to the embodiments above, the call mode is set by a cordless handset (cordless communication apparatus 100, 100A), and when the automatic mode is selected, decision of which mode to select between the single-slot mode or the multi-slot mode for executing communication is made in the cordless handset by detecting communication conditions, however, it is also possible that decision of which mode to select between the single-slot mode or the multi-slot mode for executing communication is made in the main apparatus 200 by detecting communication conditions.

Moreover, according to the embodiments above, when either of the single-slot mode or the multi-slot mode is already selected on the operating unit 11 by a user, either of the main antenna 1 or the sub-antenna 2 is to be selected depending on the reception electric field levels of antennas, however instead of above, the main antenna 1 may be used when the single-slot mode is selected, and the sub-antenna 2 may be used when the multi-slot mode is selected.

Furthermore, although communication conditions are judged by any of the reception electric field level or the bit error rate in the embodiments above, it may be also judged by the both values. For example, if the reception electric field level is lower than the predetermined level and also the bit error rate is lower than the predetermined rate, it may be judged as weak in electric field, and then the single-slot mode may be switched to the multi-slot mode. Additionally, an operating member may be provided for making an arbitrary selection by either of the reception electric field level or the bit error rate, to consider that electric wave conditions differ depending on where the cordless communication apparatus 100 is located.

## Claims

1. A cordless communication apparatus (100), comprising:
a communication mode setting unit (11) configured to switch between a single-slot mode for executing communication using one of a plurality of slots included in one frame, and a multi-slot mode for executing communication using more than one slots of the plurality of slots included in one frame, a wireless communication being executed in a communication mode selected by the communication mode setting unit (11);
**characterized in that** the apparatus further comprises:
an antenna setting unit (4) configured to switch between a first antenna (1) and a second antenna (2) having different receiving characteristics;
a communication condition detecting unit configured to detect a communication condition of each of the first antenna (1) and the second antenna (2); and
**in that** the communication mode setting unit (11) is provided with an operating member configured to select the communication mode to be an automatic mode, in which switching between the single-slot mode and multi-slot mode is controlled by a controlling unit, or an arbitrary one of the single-slot mode and the multi-slot mode;
the controlling unit being configured, when the communication mode is set to be the automatic mode, to:
when the communication condition of the first antenna (1) detected by the communication condition detecting unit is better than a predetermined communication condition, the controlling unit controls the antenna setting unit (11) to select the first antenna (1) for reception and control the communication mode setting unit (11) to set the communication mode to the single slot mode, and
when the communication condition of the first antenna (1) detected by the communication condition detecting unit is not better than a predetermined communication condition, the controlling unit controls the communication mode setting unit (11) to set the communication mode to the multi-slot mode, and compares the condition of the first antenna (1) with the condition of the second antenna (2), and when the communication condition of the second antenna (2) detected by the communication condition detecting unit is better than the communication condition of the first antenna (1) detected by the communication condition detecting unit, the controlling unit controls the antenna setting unit (4) to select the second antenna (2) for reception.

2. The cordless communication apparatus (100) according to claim 1,
wherein the communication condition detecting unit is provided with a reception electric field level detecting unit (7) to detect reception electric field levels of the first antenna (1) and the second antenna (2), the predetermined condition including a condition where the reception electric field level is greater than a predetermined value.

3. The cordless communication apparatus (100) according to claim 2, further comprising an amplifier (27) configured to amplify electric field signal received by either of the first antenna (1) and the second antenna (2),
wherein the controlling unit sets a gain of the amplifier (22) to a first value when the reception electric field level detected by the reception electric field level detecting unit (7) is higher than the predetermined level, while sets the gain of the amplifier (22) to a second value which is larger than the first value when the reception electric field level detected by the reception electric field level detecting unit (7) is not higher than the predetermined level.

4. The cordless communication apparatus (100) according to claim 1, 2 or 3,
wherein the communication condition detecting unit is provided with a bit error rate detecting unit (8a) configured to detect a bit error rate of a digital signal received by each of the first antenna (1) and the second antenna (2), the predetermined condition including a condition where the bit error rate is less than a predetermined value.

5. A method of receiving communication frames with a cordless communication apparatus (100) which is configured such that a single-slot mode for executing communication using one of a plurality of slots included in one frame, and a multi-slot mode for executing communication using more than one slots of the plurality of slots included in one frame can be switched, a wireless communication being executed in a communication mode selected by a communication mode setting unit,
**characterised in that**:
the cordless communication apparatus (100) is provided with first antenna (1) and a second antenna (2) having different receiving characteristics, and the method further comprises the steps of:
selecting the communication mode to be an arbitrary one of the single-slot mode and multi-slot mode, or an automatic mode;
detecting a communication condition of each of the first antenna (1) and the second antenna (2); and
if the communication mode is selected to be the single-slot or multi-slot mode:
comparing the condition of the first antenna (1) with the condition of the second antenna (2), and when the communication condition of the second antenna (2) is better than the communication condition of the first antenna (1), selecting the second antenna (2) for reception;
or, if the communication mode is selected to be the automatic mode:
selecting the first antenna (1) for reception and setting the communication mode to the single-slot mode when the communication condition of the first antenna (1) detected by the communication condition detecting step is better than a predetermined communication condition; and
when the communication condition of the first antenna (1) detected by the communication condition detecting step is not better than a predetermined communication condition, setting the communication mode to the multi-slot mode, and comparing the condition of the first antenna (1) with the condition of the second antenna (2), and when the communication condition of the second antenna (2) is better than the communication condition of the first antenna (1), selecting the second antenna (2) for reception.

6. The method according to claim 5,
wherein the predetermined condition including a condition where the reception electric field level is greater than a predetermined value.

7. The method according to claim 6,
wherein the cordless communication apparatus (100) is provided with an amplifier (22) configured to amplify electric field signal received by either of the first antenna (1) and the second antenna (2), and
wherein the method includes the step of setting a gain of the amplifier (22) to a first value when the reception electric field level is higher than the predetermined level, while setting the gain of the amplifier (22) to a second value which is larger than the first value when the reception electric field level is not higher than the predetermined level.

8. The method according to claim 5,
wherein the predetermined condition including a condition where the bit error rate is less than a predetermined value.

## Patentansprüche

1. Drahtlose Kommunikationsvorrichtung (100) mit:
einer Kommunikationsmoduseinstelleinheit (11), die aufgebaut ist zum Schalten zwischen einem Einzel-Slot-Modus zum Durchführen einer Kommunikation unter Verwendung eines aus einer Mehrzahl von Slots, die in einem Frame enthalten sind, und einem Mehrfach-Slot-Modus zum Durchführen einer Kommunikation unter Verwendung von mehr als einem aus der Mehrzahl von Slots, die in einem Frame enthalten sind, wobei eine drahtlose Kommunikation in einem Kommunikationsmodus durchgeführt wird, die von der Kommunikationsmoduseinstelleinheit (11) ausgewählt ist,
**dadurch gekennzeichnet, dass** die Vorrichtung weiter enthält:
eine Antenneneinstelleinheit (4), die aufgebaut ist zum Schalten zwischen einer ersten Antenne (1) und einer zweiten Antenne (2), die unterschiedliche Empfangseigenschaften haben,
eine Kommunikationsbedingungserfassungseinheit, die aufgebaut ist zum Erfassen einer Kommunikationsbedingung sowohl der ersten Antenne (1) als auch der zweiten Antenne (2), und
darin, dass die Kommunikationsmoduseinstelleinheit (11) mit einem Bedienelement versehen ist, das aufgebaut ist zum Wählen des Kommunikationsmodus als automatischen Modus, in dem das Schalten zwischen dem Einzel-Slot-Modus und dem Mehrfach-Slot-Modus durch eine Steuereinheit gesteuert wird, oder als beliebigen Modus aus dem Einzel-Slot-Modus und dem Mehrfach-Slot-Modus,
wobei die Steuereinheit aufgebaut ist, dass dann, wenn der Kommunikationsmodus als automatischer Modus eingestellt ist:
die Steuereinheit die Antenneneinstelleinheit (11) steuert, die erste Antenne (1) für den Empfang zu verwenden, und die Kommunikationsmoduseinstelleinheit (11) steuert, den Kommunikationsmodus auf den Einzel-Slot-Modus einzustellen, wenn die Kommunikationsbedingung der ersten Antenne (1), die durch die Kommunikationsbedingungserfassungseinheit erfasst ist, besser als eine vorbestimmte Kommunikationsbedingung ist, und
die Steuereinheit die Kommunikationsmoduseinstelleinheit (11) steuert, den Kommunikationsmodus auf den Mehrfach-Slot-Modus einzustellen, und die Bedingung der ersten Antenne (1) mit der Bedingung der zweiten Antenne (2) vergleicht, wenn die Kommunikationsbedingung der ersten Antenne (1), die durch die Kommunikationsbedingungserfassungseinheit erfasst ist, nicht besser als eine vorbestimmte Kommunikationsbedingung ist, und die Antenneneinstelleinheit (4) steuert, die zweite Antenne (2) für den Empfang zu verwenden, wenn die Kommunikationsbedingung der zweiten Antenne (2), die durch die Kommunikationsbedingungserfassungseinheit erfasst ist, besser als die Kommunikationsbedingung der ersten Antenne (1) ist, die durch die Kommunikationsbedingungserfassungseinheit erfasst ist.

2. Drahtlose Kommunikationsvorrichtung (100) gemäß Anspruch 1, bei der
die Kommunikationsbedingungserfassungseinheit mit einer elektrischen Empfangsfeldstärkenerfassungseinheit (7) versehen ist, um Feldstärken des elektrischen Empfangsfelds der ersten Antenne (1) und der zweiten Antenne (2) zu erfassen, und
die vorbestimmte Bedingung eine Bedingung enthält, nach der die elektrische Empfangsfeldstärke größer als ein vorbestimmter Wert ist.

3. Drahtlose Kommunikationsvorrichtung (100) gemäß Anspruch 2,
die weiter einen Verstärker (27) enthält, der aufgebaut ist zum Verstärken des elektrischen Feldsignals, das von der ersten Antenne (1) und der zweiten Antenne (2) empfangen wird,
wobei die Steuereinheit eine Verstärkung des Verstärkers (22) auf einen ersten Wert einstellt, wenn die Feldstärke des elektrischen Empfangsfelds, die von der Empfangsfeldstärkenerfassungseinheit (7) erfasst wird, größer als der vorbestimmte Pegel ist, während sie die Verstärkung des Verstärkers (22) auf einen zweiten Wert einstellt, der größer als der erste Wert ist, wenn die Feldstärke des elektrischen Empfangsfelds, die von der Empfangsfeldstärkenerfassungseinheit (7) erfasst wird, nicht größer als der vorbestimmte Pegel ist.

4. Drahtlose Kommunikationsvorrichtung (100) gemäß Anspruch 1, 2 oder 3, bei der
die Kommunikationsbedingungserfassungseinheit mit einer Bitfehlerratenerfassungseinheit (8a) versehen ist, um eine Bitfehlerrate eines Digitalsignals zu erfassen, das von der ersten Antenne (1) und der zweiten Antenne (2) empfangen wird, und
die vorbestimmte Bedingung eine Bedingung enthält, nach der die Bitfehlerrate kleiner als ein vorbestimmter Wert ist.

5. Verfahren zum Empfangen von Kommunikations-Frames mit einer drahtlosen Kommunikationsvorrichtung (100), die so aufgebaut ist, dass ein Einzel-Slot-Modus zum Durchführen einer Kommunikation unter Verwendung eines aus einer Mehrzahl von Slots, die in einem Frame enthalten sind, und ein Mehrfach-Slot-Modus zum Durchführen einer Kommunikation unter Verwendung von mehr als einem aus der Mehrzahl von Slots, die in einem Frame enthalten sind, geschaltet werden können, wobei eine drahtlose Kommunikation in einem Kommunikationsmodus durchgeführt wird, die von einer Kommunikationsmoduseinstelleinheit ausgewählt ist
**dadurch gekennzeichnet, dass**
die drahtlose Kommunikationsvorrichtung (100) mit einer ersten Antenne (1) und einer zweiten Antenne (2) versehen ist, die unterschiedliche Empfangseigenschaften haben, und
das Verfahren weiter die Schritte enthält:
Wählen des Kommunikationsmodus als beliebigen Modus aus dem Einzel-Slot-Modus und dem Mehrfach-Slot-Modus oder als automatischen Modus,
Erfassen einer Kommunikationsbedingung sowohl der ersten Antenne (1) als auch der zweiten Antenne (2), und
in dem Fall, in dem der Kommunikationsmodus als Einzel-Slot-Modus oder Mehrfach-Slot-Modus gewählt ist:
Vergleichen der Bedingung der ersten Antenne (1) mit der Bedingung der zweiten Antenne (2) und
Wählen der zweiten Antenne (2) für den Empfang, wenn die Kommunikationsbedingung der zweiten Antenne (2) besser als die Kommunikationsbedingung der ersten Antenne (1) ist; oder
in dem Fall, in dem der Kommunikationsmodus als automatischer Modus gewählt ist:
Wählen der ersten Antenne (1) für den Empfang und Einstellen des Kommunikationsmodus auf den Einzel-Slot-Modus, wenn die Kommunikationsbedingung der ersten Antenne (1), die in dem Kommunikationsbedingungserfassungsschritt erfasst wurde, besser als eine vorbestimmte Kommunikationsbedingung ist, und
Einstellen des Kommunikationsmodus auf den Mehrfach-Slot-Modus und Vergleichen der Bedingung der ersten Antenne (1) mit der Bedingung der zweiten Antenne (2), wenn die Kommunikationsbedingung der ersten Antenne (1), die durch den Kommunikationsbedingungserfassungsschritt erfasst wurde, nicht besser als eine vorbestimmte Kommunikationsbedingung ist, und
Verwenden der zweite Antenne (2) für den Empfang, wenn die Kommunikationsbedingung der zweiten Antenne (2) besser als die Kommunikationsbedingung der ersten Antenne (1) ist.

6. Verfahren gemäß Anspruch 5, bei dem
die vorbestimmte Bedingung eine Bedingung enthält, nach der die elektrische Empfangsfeldstärke größer als ein vorbestimmter Wert ist.

7. Verfahren gemäß Anspruch 6, bei dem
die drahtlose Kommunikationsvorrichtung (100) mit einem Verstärker (22) versehen ist, der aufgebaut ist zum Verstärken des elektrischen Feldsignals, das von der ersten Antenne (1) und der zweiten Antenne (2) empfangen wird,
das Verfahren den Schritt enthält, eine Verstärkung des Verstärkers (22) auf einen ersten Wert einzustellen, wenn die Feldstärke des elektrischen Empfangsfelds größer als der vorbestimmte Pegel ist, und die Verstärkung des Verstärkers (22) auf einen zweiten Wert einzustellen, der größer als der erste Wert ist, wenn die Feldstärke des elektrischen Empfangsfelds nicht größer als der vorbestimmte Pegel ist.

8. Verfahren gemäß Anspruch 5, bei dem
die vorbestimmte Bedingung eine Bedingung enthält, nach der die Bitfehlerrate kleiner als ein vorbestimmter Wert ist.

## Revendications

1. Appareil de communication sans fil (100), comprenant :
une unité de réglage (11) du mode de communication configurée pour basculer entre un mode de communication mono-estampille temporelle pour l'exécution d'une communication en utilisant l'une d'une pluralité d'estampilles temporelles comprises dans une trame, et un mode de communication à plusieurs estampilles temporelles pour l'exécution d'une communication en utilisant plus d'une estampille temporelle de la pluralité d'estampilles temporelles comprises dans une trame, une communication sans fil étant exécutée dans un mode de communication choisi par l'unité de réglage (11) du mode de communication ;
**caractérisé en ce que** l'appareil comprend en outre :
une unité de réglage d'antenne (4) configurée pour basculer entre une première antenne (1) et une deuxième antenne (2) qui ont des caractéristiques de réception différentes ;
une unité de détection de l'état de communication configurée pour détecter un état de communication de chacune de la première antenne (1) et de la deuxième antenne (2) ; et
**en ce que** l'unité de réglage (11) du mode de communication est dotée d'un élément de commande configuré pour sélectionner le mode de communication pour que ce soit un mode automatique, dans lequel le basculement entre le mode de communication mono-estampille temporelle et le mode de communication à plusieurs estampilles temporelles est commandé par une unité de commande, ou un mode arbitraire entre le mode de communication mono-estampille temporelle et le mode de communication à plusieurs estampilles temporelles ;
l'unité de commande étant configurée, lorsque le mode de communication est réglé sur le mode automatique, pour que :
lorsque l'état de communication de la première antenne (1) détecté par l'unité de détection de l'état de communication est meilleur qu'un état de communication prédéterminé, l'unité de commande commande l'unité de réglage d'antenne (11) pour sélectionner la première antenne (1) pour la réception et commande l'unité de réglage (11) du mode de communication pour régler le mode de communication au mode de communication mono-estampille temporelle, et
lorsque l'état de communication de la première antenne (1) détecté par l'unité de détection de l'état de communication n'est pas meilleur qu'un état de communication prédéterminé, l'unité de commande commande l'unité de réglage (11) du mode de communication pour régler le mode de communication sur le mode de communication à plusieurs estampilles temporelles, et compare l'état de la première antenne (1) à l'état de la deuxième antenne (2), et lorsque l'état de communication de la deuxième antenne (2) détecté par l'unité de détection de l'état de communication est meilleur que l'état de communication de la première antenne (1) détecté par l'unité de détection de l'état de communication, l'unité de commande commande l'unité de réglage d'antenne (4) pour sélectionner la deuxième antenne (2) pour la réception.

2. Appareil de communication sans fil (100) selon la revendication 1, dans lequel l'unité de détection de l'état de communication est dotée d'une unité de détection (7) de niveaux de champs électriques de réception pour détecter des niveaux de champ électrique de réception de la première antenne (1) et de la deuxième antenne (2), l'état prédéterminé comportant un état dans lequel le niveau de champ électrique de réception est supérieur à une valeur prédéterminée.

3. Appareil de communication sans fil (100) selon la revendication 2, comprenant en outre un amplificateur (27) configuré pour amplifier un signal de champ électrique reçu par l'une ou l'autre de la première antenne (1) et de la deuxième antenne (2),
où l'unité de commande règle un gain de l'amplificateur (22) sur une première valeur lorsque le niveau de champ électrique de réception détecté par l'unité de détection (7) de niveaux de champs électriques de réception est supérieur au niveau prédéterminé, alors qu'elle règle le gain de l'amplificateur (22) sur une deuxième valeur qui est supérieure à la première valeur lorsque le niveau de champ électrique de réception détecté par l'unité de détection (7) de niveaux de champs électriques de réception ne dépasse pas le niveau prédéterminé.

4. Appareil de communication sans fil (100) selon la revendication 1, 2 ou 3,
dans lequel l'unité de détection d'état de communication est dotée d'une unité (8) de détection d'un taux d'erreurs binaires configurée pour détecter un taux d'erreurs binaires d'un signal numérique reçu par chacune de la première antenne (1) et de la deuxième antenne (2), l'état prédéterminé comportant un état où le taux d'erreurs binaires est inférieur à une valeur prédéterminée.

5. Procédé de réception de trames de communication à l'aide d'un appareil de communication sans fil (100) qui est configuré de sorte à pouvoir basculer entre un mode de communication mono-estampille temporelle pour l'exécution d'une communication en utilisant l'une d'une pluralité d'estampilles temporelles comprises dans une trame, et un mode de communication à plusieurs estampilles temporelles pour l'exécution d'une communication en utilisant plus d'une estampille temporelle de la pluralité d'estampille temporelles comprises dans une trame, une communication sans fil étant exécutée dans un mode de communication sélectionné par une unité de réglage du mode de communication,
**caractérisé en ce que** :
l'appareil de communication sans fil (100) est doté d'une première antenne (1) et d'une deuxième antenne (2) ayant des caractéristiques de réception différentes, et le procédé comprend en outre les étapes qui consistent :
à sélectionner le mode de communication pour que ce soit un mode arbitraire parmi le mode de communication mono-estampille temporelle et le mode de communication à plusieurs estampilles temporelles, ou d'un mode automatique ;
à détecter un état de communication de chacune de la première antenne (1) et de la deuxième antenne (2) ; et
si le mode de communication est sélectionné pour être le mode de communication mono-estampille temporelle ou à plusieurs estampilles temporelles :
à comparer l'état de la première antenne (1) à l'état de la deuxième antenne (2), et lorsque l'état de communication de la deuxième antenne (2) est meilleur que l'état de communication de la première antenne (1), à sélectionner la deuxième antenne (2) pour la réception ;
ou, si le mode de communication est sélectionné pour être le mode automatique :
à sélectionner la première antenne (1) pour la réception et à régler le mode de communication sur le mode de communication mono-estampille temporelle lorsque l'état de communication de la première antenne (1) détecté par l'étape de détection de l'état de communication est meilleur qu'un état de communication prédéterminé ; et
lorsque l'état de communication de la première antenne (1) détecté par l'étape de détection d'état de communication n'est pas meilleur qu'un état de communication prédéterminé, à régler le mode de communication sur le mode de communication à plusieurs estampilles temporelles, et à comparer l'état de la première antenne (1) à l'état de la deuxième antenne (2), et lorsque l'état de communication de la deuxième antenne (2) est meilleur que l'état de communication de la première antenne (1), à sélectionner la deuxième antenne (2) pour la réception.

6. Procédé selon la revendication 5, dans lequel l'état prédéterminé comporte un état dans lequel le niveau du champ électrique de réception est supérieur à une valeur prédéterminée.

7. Procédé selon la revendication 6, dans lequel l'appareil de communication sans fil (100) est doté d'un amplificateur (22) configuré pour amplifier un signal de champ électrique reçu par l'une ou l'autre de la première antenne (1) et de la deuxième antenne (2), et
où le procédé comporte l'étape qui consiste à régler un gain de l'amplificateur (22) sur une première valeur lorsque le niveau du champ électrique de réception est supérieur au niveau prédéterminé, en réglant en revanche le gain de l'amplificateur (22) sur une deuxième valeur qui est supérieure à la première valeur lorsque le niveau du champ électrique de réception ne dépasse pas le niveau prédéterminé.

8. Procédé selon la revendication 5, dans lequel l'état prédéterminé comporte un état où le taux d'erreurs binaires est inférieur à une valeur prédéterminée.
